(19) Europäisches Patentamt
European Patent Office
Office européen des brevets

(11) EP 1 574 551 B1

(12) **EUROPEAN PATENT SPECIFICATION**

(45) Date of publication and mention of the grant of the patent:
**25.05.2011 Bulletin 2011/21**

(21) Application number: **03777210.0**

(22) Date of filing: **03.12.2003**

(51) Int Cl.:
***C08K 7/00*** *(2006.01)* ***C08L 77/10*** *(2006.01)*
***C08K 7/04*** *(2006.01)* ***C08K 7/06*** *(2006.01)*

(86) International application number:
**PCT/JP2003/015487**

(87) International publication number:
**WO 2004/050764 (17.06.2004 Gazette 2004/25)**

(54) **COMPOSITE FIBER COMPRISING WHOLLY AROMATIC POLYAMIDE AND CARBON NANOTUBE**

VERBUNDFASER MIT VOLLAROMATISCHEM POLYAMID UND KOHLENSTOFFNANORÖHRCHEN

FIBRE COMPOSITE CONTENANT UN POLYAMIDE ENTIEREMENT AROMATIQUE ET UN NANOTUBE EN CARBONE

(84) Designated Contracting States:
**AT BE BG CH CY CZ DE DK EE ES FI FR GB GR HU IE IT LI LU MC NL PT RO SE SI SK TR**

(30) Priority: **04.12.2002 JP 2002352178**

(43) Date of publication of application:
**14.09.2005 Bulletin 2005/37**

(73) Proprietor: **TEIJIN LIMITED**
**Osaka-shi**
**Osaka 541-0054 (JP)**

(72) Inventors:
- **NITTA, Hideaki, c/o Teijin Limited Iwakuni-shi, Yamaguchi 740-0014 (JP)**
- **CHOKAI, Masayuki, c/o Teijin Limited Iwakuni-shi, Yamaguchi 740-0014 (JP)**
- **SATO, Kazuhiko, c/o Teijin Limited Iwakuni-shi, Yamaguchi 740-0014 (JP)**
- **MATSUMURA, Shunichi, c/o Teijin Limited Iwakuni-shi, Yamaguchi 740-0014 (JP)**
- **HONDA, Susumu, c/o Teijin Limited Iwakuni-shi, Yamaguchi 740-0014 (JP)**
- **KAWAMURA, Masaaki, c/o Teijin Limited Hino-shi, Tokyo 191-0065 (JP)**
- **OHMORI, Satoru Chiyoda-ku, Tokyo 100-0011 (JP)**

(74) Representative: **Hallybone, Huw George et al**
**Carpmaels & Ransford**
**One Southampton Row**
**London**
**WC1B 5HA (GB)**

(56) References cited:

| | |
|---|---|
| **WO-A-00/69958** | **WO-A-03/085049** |
| **WO-A1-00/69958** | **JP-A- 2003 012 939** |
| **JP-A- 2003 138 040** | **JP-A- 2003 138 040** |
| **US-A- 5 276 085** | **US-A1- 2003 096 104** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 574 551 B1

## Description

### Technical Field

The present invention relates to a composite fiber including a wholly aromatic polyamide and carbon nanotubes, a composite fiber excellent in mechanical characteristics, characterized in that the carbon nanotubes are oriented in the fiber axis direction.

### Background Art

The wholly aromatic polyamide assumes a structure in which rigid aromatic rings are linked, and finds a wide range of uses for electrically insulating materials, various reinforcing agents, bulletproof fibers, and the like, as materials excellent in heat resistance, mechanical characteristics, chemical resistance, and the like in the form of a fiber or a film. It is one of the materials with a very high industrial value. However, high level characteristics of the resin have come to be demanded according to the intended purpose.

As one of the technologies satisfying such required characteristics, a composition obtained by dispersing carbon nanotubes in a thermoplastic resin on a nanoscale, a so-called nanocomposite has received attention in recent years. For example, in JP-B-8-26164, there is a description that carbon nanotubes are oriented in a matrix by electrolysis, an appropriate shearing action, or combing.

WO 00 069958 discloses a method for the production of a reinforced polymer which contains nanotubes. The nanotubes are oriented by stretching the mixture in the solid state.

Whereas, in WO 03/085049, a production method of a composition including single-wall carbon nanotubes and an aromatic polyamide, and a fiber thereof are described. A method for adding carbon nanotubes in a sulfuric anhydride solution of an aromatic polyamide is preferably mentioned. However, there is no description of the dispersion or orientation state of the carbon nanotubes in the composite fiber, and the effects on the physical properties. Further, the improvement effects on the mechanical characteristics of the fiber are also unknown.

### Disclosure of the Invention

It is an object of the present invention to provide a composite fiber including a wholly aromatic polyamide and carbon nanotubes improved in mechanical characteristics, and particularly, in elastic modulus and strength.

Namely, it is a composite fiber which includes 100 parts by weight of a wholly aromatic polyamide mainly including structural units of the following formulae (A) and (B):

$$-NH-Ar^1-NH- \qquad (A)$$

$$-OC-Ar^2-CO- \qquad (B)$$

where in the formulae (A) and (B), $Ar^1$ and $Ar^2$ each independently represent a bivalent aromatic group having 6 to 20 carbon atoms; and 0.01 to 100 parts by weight of carbon nanotubes with an average diameter of 300 nm or less, and an average aspect ratio of 5.0 or more, characterized in that the carbon nanotubes are oriented in the fiber axis direction, and further characterised in that the carbon nanotubes are multiwall carbon nanotubes and the orientation factor F of the carbon nanotubes can be determined with the following formula (1):

$$<\cos^2\phi> = \frac{\int_0^{\pi/2} I(\phi)\cos^2\phi \sin\phi d\phi}{\int_0^{\pi/2} I(\phi)\sin\phi d\phi}$$
$$F = \frac{3<\cos^2\phi>-1}{2} \qquad (1)$$

where $\phi$ represents the azimuth in an X-ray diffraction measurement, and I represents the diffraction strength of the 002 crystal face of the multiwall carbon nanotubes, is 0.1 or more.

Also disclosed is that, in the Raman spectrum derived from the carbon nanotubes when an incoming laser has been applied from the direction orthogonal to the fiber axis to the side of the fiber, the orientation degree P represented by the following formula (2):

$$P = I_{YY}/I_{XX} \qquad (2)$$

where in the formula, $I_{XX}$ represents the G-band strength when the laser polarization plane has been arranged in parallel with the fiber axis, and $I_{YY}$ represents the G-band strength when the laser polarization plane has been arranged vertically to the fiber axis,
satisfies the range of 0 or more and 0.7 or less.

Still further, the invention relates to a method for manufacturing the composite fiber.

Brief Description of the Drawings

FIG. 1 is a photograph observed by an electron microscope (TEM) from the fiber cross section cut roughly in parallel with the fiber axis of a composite fiber manufactured in Example 2, wherein an arrow in the diagram indicates the fiber axis direction, and white lines are the marks made by dragging of a carbon nanotube by a cutter.

FIG. 2 is a photograph observed by an electron microscope (TEM) from the fiber cross section cut roughly in parallel with the fiber axis of a composite fiber manufactured in Example 3, wherein an arrow in the diagram indicates the fiber axis direction, and white lines are the marks made by dragging of a carbon nanotube by a cutter.

FIG. 3 is a photograph observed by an electron microscope (TEM) from the fiber cross section cut roughly in parallel with the fiber axis of a composite fiber manufactured in Example 5, wherein an arrow in the diagram indicates the fiber axis direction, and white lines are the marks made by dragging of a carbon nanotube by a cutter.

Preferred Embodiments of the Invention

Below, the present invention will be described in details.

(Regarding carbon nanotube)

For the carbon nanotube in a composite fiber of the invention, the average diameter is 300 nm or less, preferably 0.3 to 250 nm, more preferably 0.3 to 200 nm, and further preferably 0.4 to 100 nm. The one with a diameter of 0.3 nm or less is substantially difficult to manufacture. The one of 300 nm or more is difficult to disperse in a solvent, and hence it is not preferable.

Although there is no upper limit restriction on the preferred value of the average aspect ratio, the lower limit thereof is 5.0 or more, preferably 10.0 or more, and further preferably 20.0 or more. When the average aspect ratio is less than 5.0, the improvement effects on the mechanical characteristics of the fiber unfavorably become insufficient. The average diameter and the aspect ratio of the carbon nanotube can be determined from the observation by an electron microscope. For example, it is possible that, TEM (transmission electron microscope) measurement is carried out, and the diameter and the longitudinal length of the carbon nanotube are measured directly from the image. Further, it is possible to know the form of the carbon nanotube in the composite fiber by, for example, the TEM (transmission electron microscope) measurement of the fiber cross section cut in parallel with the fiber axis.

The carbon nanotube is in the form of a cylindrically coiled graphene sheet.

The carbon nanotubes are manufactured by a conventionally known method, non-limiting examples of which may include a gas phase flow method, a catalyst carrying type gas phase flow method, a laser ablation method, a high pressure carbon monoxide method, an arc discharge method, and the like.

(Regarding wholly aromatic polyamide)

The wholly aromatic polyamide in the composite fiber of the invention is a wholly aromatic polyamide substantially made of a structure in which two structural units of the following formulae (A) and (B)

$-NH-Ar^1-NH-$ (A)

$-OC-Ar^2-CO-$ (B)

where in the formulae (A) and (B), $Ar^1$ and $Ar^2$ each independently represent a bivalent aromatic group having 6 to 20 carbon atoms; are alternately repeated.

$Ar^1$ and $Ar^2$ described above each independently represent a bivalent aromatic group having 6 to 20 carbon atoms. Specific examples thereof may include a metaphenylene group, a paraphenylene group, an orthophenylene group, a 2,6-naphthylene group, a 2,7-naphthylene group, a 4,4'-isopropylidene diphenylene group, a 4,4'-biphenylene group, a 4,4'-diphenylene sulfide group, a 4,4'-diphenylene sulfone group, a 4,4'-diphenylene ketone group, a 4,4'-diphenylene ether group, a 3,4'-diphenylene ether group, a metaxylylene group, a paraxylylene group, and an orthoxylylene group.

One or a plurality of the hydrogen atoms of the respective aromatic groups may be each independently substituted with a halogen group such as fluorine, chlorine, or bromine; an alkyl group having 1 to 6 carbon atoms such as a methyl group, an ethyl group, a propyl group, or a hexyl group; a cycloalkyl group having 5 to 10 carbon atoms such as a cyclopentyl group or a cyclohexyl group; or an aromatic group having 6 to 10 carbon atoms such as a phenyl group. Incidentally, the structural unit of the formulae (A) and/or (B) may be a copolymer made of two or more aromatic groups.

Out of these, $Ar^1$ is preferably a metaphenylene group, a paraphenylene group, or a 3,4'-diphenylene ether group, and further preferably, a paraphenylene group, or a combination of a paraphenylene group and a 3,4' -diphenylene ether group. When a paraphenylene group and a 3,4'-diphenylene ether group are used in combination, the molar ratio is further preferably in the range of 1 : 0.8 to 1 : 1.2.

$Ar^2$ is preferably a metaphenylene group, or a paraphenylene group, and further preferably a paraphenylene group.

Namely, as the ones preferably used in the invention, mention may be specifically made of a wholly aromatic polyamide which is a copolymer in which $Ar^1$ is a paraphenylene group and a 3,4'-diphenylene ether group, and $Ar^2$ is a paraphenylene group, and the copolymerization ratio (the molar ratio of the paraphenylene group and the 3,4'-diphenylene ether group of $Ar^1$) falls in the range of 1 : 0.8 to 1 : 1.2, and a wholly aromatic polyamide in which $Ar^1$ and $Ar^2$ are both paraphenylene groups.

These wholly aromatic polyamides can be manufactured by a conventionally known method such as a solution polymerization method, an interfacial polymerization method, or a melt polymerization method. The degree of polymerization can be controlled by the ratio of an aromatic diamine component and an aromatic dicarboxylic acid component. As the molecular weight of the resulting polymer, the inherent viscosity $\eta$ inh of the solution of the polymer dissolved in a concentration of 0.5 g / 100 mL in a 98 wt% concentrated sulfuric acid measured at 30 °C is preferably 0.05 to 20 dL/g, and more preferably between 1.0 and 10 dL/g.

(Composition)

As the composition of the composite fiber of the invention, the amount of the carbon nanotubes is 0.01 to 100 parts by weight, preferably 0.1 to 60 parts by weight, and further preferably 1 to 10 parts by weight per 100 parts by weight of the wholly aromatic polyamide. When the amount of the carbon nanotubes is less than 0.01 part by weight, the effect of the improvement of the mechanical characteristics is difficult to observed. Whereas, when it is more than 100 parts by weight, spinning becomes difficult.

(Regarding the orientation and the orientation method)

A feature of the invention resides in that the carbon nanotubes in the composite fiber are oriented in the fiber axis direction. The orientation property of such carbon nanotubes is evaluated by, other than the direct observation of the fiber cross section cut in parallel with the fiber axis with an electron microscope such as a TEM, in the invention, an X-ray diffraction measurement or a polarized Raman spectroscopic measurement. The carbon nanotube is a multiwall carbon nanotube, and the orientation factor F represented by the following formula (1) is determined :

$$< \cos^2 \phi > = \frac{\int_0^{\pi/2} I(\phi) \cos^2 \phi \sin \phi d\phi}{\int_0^{\pi/2} I(\phi) \sin \phi d\phi} \qquad (1)$$

$$F = \frac{3 < \cos^2 \phi > -1}{2}$$

(Masao Kakumoto, etal, KOUBUNNSHI X-SENN KAISETSU (Polymer X-ray Diffraction) 1968, MARUZEN).

In the formula, $\phi$ represents the azimuth in the X-ray diffraction measurement, and I represents the diffraction strength of the 002 crystal face of the multiwall carbon nanotube.

The orientation factor F of the multiwall carbon nanotube in the invention is 0.1 or more. It is further preferably

0.2 or more, and more preferably 0.3 or more. The higher the value of F is, the more it is preferred. However, the theoretical upper limit value when the multiwall carbon nanotubes have been fully oriented is 1.0.

Also disclosed is the polarized Raman spectroscopic measurement, which is accomplished in the following manner. In the Raman spectrum derived from the carbon nanotube when an incoming laser has been applied from the direction orthogonal to the fiber axis to the side of the fiber, the orientation property is evaluated at an orientation degree P represented by the following formula (2) :

$$P = I_{YY}/I_{XX} \quad (2)$$

where in the formula, $I_{XX}$ represents the G-band strength when the laser polarization plane has been arranged in parallel with the fiber axis, and $I_{YY}$ represents the G-band strength when the laser polarization plane has been arranged vertically to the fiber axis. In the invention, the orientation degree P preferably satisfies the range of 0 or more and 0.7 or less.

Although such polarized Raman spectroscopic measurement is particularly effective for a single-wall carbon nanotube, it is also applicable for the multiwall carbon nanotube of the present invention. Especially when the content of the multiwall carbon nanotubes is small, and the X-ray diffraction peak of the carbon nanotubes hides behind the diffraction pattern of the polymer, the orientation degree is preferably measured by the polarized Raman spectroscopic measurement.

For the single-wall carbon nanotube, the orientation degree P asymptotically approaches P = 0 when the nanotubes have been oriented in parallel with the fiber axis direction, and the random orientation thereof results in P = 1. The upper limit of the value of P is more preferably 0.5, and further preferably 0.3. The closer it is to 0, the more it is preferred. On the other hand, for the multiwall carbon nanotube, the value of P tends to appear to be rather higher as compared with the case of the single-wall carbon nanotube. Also in the document (A. M. Rao etal., Phys. Rev. 84 (8), 1820 (200)), a value P = 0.36 is introduced as the theoretical value when the measurement is carried out with the fully oriented multiwall carbon nanotubes alone. In the invention, for the multiwall carbon nanotube, even when the value of P is 0.5 to 0.6, it can be said that sufficient orientation has been achieved.

Whereas, in the invention, the wholly aromatic polyamide in the composite fiber is also preferably oriented in the fiber axis direction, and the orientation factor F is preferably 0.5 or more. It is more preferably 0.6 or more, and further preferably 0.7 or more. Herein, the orientation factor F is determined by focusing attention on the diffraction strength I of the 002 crystal face of the wholly aromatic polyamide in the formula (1).

As the method for orienting the carbon nanotubes and the wholly aromatic polyamide in the fiber axis direction, mention may be made of a process in which in spinning from a mixed solution of a wholly aromatic polyamide and carbon nanotubes, flow orientation, liquid crystal orientation, shear orientation, or stretch orientation is achieved, or other process. The resulting fiber composition is further stretch oriented, thereby to increase the orientation factor of the carbon nanotubes. This is also further preferable for obtaining the composite fiber of the invention. The degree of increase of the orientation factor F is 0.01 or more, preferably 0.05, and further preferably 0.1 or more. Whereas, the degree of decrease of the orientation degree P is 0.01 or more, preferably 0.05, and further preferably 0.1 or more.

(Method for manufacturing a composite fiber)

As the method for manufacturing the composite fiber of the invention, a method in which a mixed solution of a wholly aromatic polyamide and carbon nanotubes is prepared, and spinning is carried out from the mixed solution is preferred. As the solvent for use in such a step, mention may be made of an amide type solvent such as dimethylacetamide or N-methyl-2-pyrrolidone, or an acid solvent such as 100 % sulfuric acid, phosphoric acid, polyphosphoric acid, or methanesulfonic acid.

As the method for preparing the mixed solution, any known method is applicable. However, for example, mention may be made of the following process: 1) to a solution of a wholly aromatic polyamide, solid carbon nanotubes are added; 2) a wholly aromatic polyamide solution and a solvent dispersion of carbon nanotubes are mixed; 3) to a solvent dispersion of carbon nanotubes, a solid wholly aromatic polyamide is added; or 4) in a solvent dispersion of carbon nanotubes, in-situ polymerization of a wholly aromatic polyamide is carried out. In any case, it is important for the orientation of the carbon nanotubes, i.e., for the improvement of the mechanical physical properties of the composite fiber that the carbon nanotubes are uniformly dispersed in the mixed solution. From this point of view, with the method 1) in which a carbon nanotube powder is added to a high viscosity polyamide solution, there remains a concern about the uniform dispersion. Therefore, as the method for preparing the mixed solution, preferably, first, a solvent dispersion of carbon nanotubes is formed. However, the carbon nanotubes themselves are low in solubility, and mutually entangled remarkably. For this reason, in general, they are often poor in dispersibility in the solvent. Therefore, in the invention, it is desirable to obtain a carbon nanotube dispersion in a favorable dispersion state.

For evaluating the dispersibility of the carbon nanotubes in a solvent, mention may be made of a method for measuring the particle size distribution in the solvent, other than the direct observation of the outward appearance. The particle size distribution of the carbon nanotubes is measurable by a dynamic light scattering method, a laser diffraction method, or the like.

In the invention, in order to enhance the dispersibility of the carbon nanotubes in a solvent and the dispersibility in a mixed solvent, the carbon nanotubes are preferably subjected to some treatment in advance. The treatment method has no particular restriction so long as the tube structure of each carbon nanotube is held. However, specifically, mention may be made of an ultrasonic treatment, a physical size reduction treatment, a strong acid treatment, a chemical surface treatment, or the like.

As the physical size reduction treatment, mention may be made of a dry mill treatment using a ball mill, a wet mill treatment using a bead mill, a shear treatment by a homogenizer or the like, or other treatment. By these treatments, it is possible to reduce the size of the carbon nanotubes, and to enhance the dispersibility. Whereas, an excessive treatment may cause a large reduction in the aspect ratio, and a damage of the nanotube structure itself. Thus, the treatment is required to be performed with attention paid thereto.

As the strong acid treatment on the carbon nanotubes, specifically, mention may be made of a treatment using a strong acid with a pH of 0.01 to 2. The strong acid treatment can provide a carbon nanotube having a carboxylic acid or a hydroxyl group as a substituent. This can enhance the affinity for a solvent or a wholly aromatic polyamide, and improve the dispersibility. As usable strong acids with a pH of 0.01 to 2, for example, mention may be made of nitric acid, sulfuric acid, hydrochloric acid, phosphoric acid, dichromic acid, and a mixed acid thereof. Out of these, nitric acid, a mixed acid of sulfuric acid and nitric acid, or a mixed acid of dichromic acid and sulfuric acid is preferably used. The one with a high concentration is in particular preferably used. An anhydrous acid such as sulfuric anhydride is not preferred for the purpose of introducing a carboxylic acid as a substituent. Further, the strong acid treatment is preferably carried out in the presence of an ultrasonic wave. After the strong acid treatment, the treatment solution is dispersed in water, followed by filtration and washing. As a result, it is possible to isolate the carbon nanotubes. Also in the case of the strong acid treatment, as with the case of the physical size reduction treatment, an excessive treatment may cause a damage of the nanotube structure. Therefore, the treatment is preferably carried out with attention paid thereto.

By applying such a strong acid treatment thereto, it is possible to obtain a carbon nanotube having oxygen atoms in an appropriate proportion. However, the oxygen atoms on the surface are present in a proportion of preferably in the range of 2 to 25 per 100 of carbon atoms. The presence of the oxygen atoms on the carbon nanotube surface can be recognized by a surface analysis technique such as ESCA.

Further, as the chemical surface treatment of the carbon nanotube, it is also preferable that, following the strong acid treatment, esterification or amidation is carried out. The introduction of these functional groups can be recognized by the IR measurement, the change in surface element ratio by ESCA, or the like.

Herein, as the esterification method, for example, mention may be made of a method in which the carboxylic acid in the carbon nanotube after the strong acid treatment and diaryl carbonate are allowed to react, thereby to obtain an aryl ester form. The reaction is preferably effected in the presence of a catalyst. Examples of the catalyst may include pyridine type compounds such as 4-aminopyridine, 4-dimethyl aminopyridine, 4-diethyl aminopyridine,4-pyrolidinopyridine, 4-piperidinopyridine, 4-pyrrolinopyridine, and 2-methyl-4-dimethyl aminopyridine. Out of these, 4-dimethyl aminopyridine and 4-pyrolidinopyridine are particularly preferred.

Whereas, as the amidation method, for example, mention may be made of a method in which the aryl ester form of the carbon nanotube obtained by the strong acid treatment, followed by esterification as described above is allowed to react with an amine compound such as aniline, naphthylamine, paraphenylene diamine, and metaphenylene diamine.

These treatment methods may be carried out alone, or may be carried out in combination. In the invention, the physical size reduction treatment can be mentioned as a particularly preferred treatment.

A mixed solution with a wholly aromatic polyamide can be obtained from a solvent dispersion of carbon nanotubes as described above. The dispersibility of carbon nanotubes in such a mixed solution is also important. The carbon nanotubes are desirably dispersed as uniformly as possible. It is possible to determine the dispersibility at this time point to a certain degree by directly observing the mixed solution with an optical microscope. As the method of spinning from the mixed solution, any of a wet method, a dry method, and a combination of a wet method and a dry method may be used. As described above, by achieving flow orientation, liquid crystal orientation, shear orientation, or stretch orientation in the spinning step, it is possible to enhance the orientation of the wholly aromatic polyamide and the carbon nanotubes, and to improve the mechanical characteristics. When the wholly aromatic polyamide is, for example, a copolymerized wholly aromatic polyamide in which $Ar^1$ denotes a paraphenylene group and a 3,4'-diphenylene ether group, and $Ar^2$ denotes a paraphenylene group, and the copolymerization ratio thereof (the molar ratio of the paraphenylene group and the 3,4'-diphenylene ether group of $Ar^1$) falls within a range of 1 : 0.8 to 1 : 1.2, by carrying out dry-wet spinning using an amide type solvent such as dimethyl acetamide or N-methyl-2-pyrrolidone as a mixed solvent, and then, causing stretch orientation under high temperatures in a high ratio, it is possible to obtain a composite fiber. The preferred draw

ratio in such a case is 2 to 40 times, and more preferably 5 to 30 times. Stretching with a ratio as close as possible to the maximum draw ratio (MDR) is desirable from the viewpoint of the mechanical physical properties. The temperature for the stretch orientation is preferably 100 °C to 800 °C, and more preferably 200 °C to 600 °C. Whereas, when the wholly aromatic polyamide is, for example, poly(paraphenylene terephthalamide) in which $Ar^1$ and $Ar^2$ are both para-phenylene groups, it is possible to obtain a composite fiber by liquid crystal spinning using an acid solvent such as 100 % sulfuric acid, phosphoric acid, polyphosphoric acid, or methanesulfonic acid as a mixed solvent. With liquid crystal spinning, generally, orientation can be achieved by spinning a solution from a cap in a high draft ratio.

The composite fiber made of a wholly aromatic polyamide and carbon nanotubes obtainable in the invention is excellent in mechanical characteristics, particularly in elastic modulus and tensile strength due to the orientation of the carbon nanotubes in the composition in the fiber axis direction.

Examples

Below, the invention will be described in details by way of Examples. However, the invention is by no way limited to these examples.

(1) The average diameter and the average aspect ratio of the carbon nanotubes were measured by means of a TEM (transmission electron microscope, H-800 model) manufactured by Hitachi Ltd. The carbon nanotubes were dispersed in N-methyl-2-pyrrolidone (which is hereinafter abbreviated as NMP.) with a concentration of 0.1 mg/mL under an ultrasonic treatment. Then, the dispersion was added dropwise to a grid for TEM measurement, and the sample obtained by drying under reduced pressure was observed. The diameters and the lengths were directly measured from the image, and the average values thereof were determined.

(2) Dynamic light scattering measurement of the carbon nanotubes: a dynamic light scattering photometer DLS-7000 manufactured by Otsuka Electronics Co., Ltd., was used. An NMP dispersion of carbon nanotubes with a concentration of 0.01 mg/mL was prepared, and it was subjected to an ultrasonic treatment for 1 hour. Then, dynamic light scattering measurements were carried out at 25 °C with an Ar laser, and the particle size distribution and the average particle size were calculated by a histogram method analysis.

(3) X-ray diffraction measurement: measurements were carried out under the conditions of: target, CuK $\alpha$ ray; voltage, 45 kV; and current, 70 mA for an X-ray generator (RU-B model manufactured by Rigaku Corporation). The incoming X-ray was condensed and made monochromic by a multilayer film mirror manufactured by Osmic Inc., so that the cross section of each sample was measured with a vertical transmission method. For the detection of the diffraction X-ray, measurements were carried out using an imaging plate with dimensions of 200 mm x 250 mm (manufactured by Fuji Photo Film Co., Ltd.), under the condition of a camera length of 250 mm.

(4) Polarized Raman spectroscopic measurement: for the Raman spectroscopic device, a microscopic laser Raman spectroscopic measurement device (LabRamHR manufactured by HORIBA JOBIN YVON) was used. A semiconductor laser with a wavelength of 785 nm was used as an excitation layer light source, and the laser beam diameter was condensed to about 1 $\mu$m. By the use of such devices, polarized Raman spectroscopic measurements were carried out in the following manner. In applying an incoming laser from the direction orthogonal to the fiber axis to the side of the fiber composition, and measuring the Raman spectrum of the carbon nanotube, the G-band strength ($I_{XX}$) derived from the graphite structure at a Raman shift wave number of around 1580 $cm^{-1}$ when the laser polarization plane has been arranged in parallel with the fiber axis, and the G-band strength ($I_{YY}$) when the laser polarization plane has been arranged vertically to the fiber axis were measured.

(5) Mechanical characteristics of the fiber: by the use of a Tensilon universal tester 1225A manufactured by Orientech Co., Ltd., the resulting fiber was subjected to a tensile test in a single yarn, so that the elastic modulus and the strength were determined.

(6) Observation of carbon nanotubes in the composite: a TEM (transmission electron microscope) measurement of the fiber cross section cut roughly in parallel with the fiber axis was carried out, and the orientation property of the carbon nanotubes was evaluated from the image.

(7) Elementary analysis of the carbon nanotube surface: an evaluation was carried out with ESCA (X-ray photoelectron spectroscopic measurement). By the use of ESCALAB-200 manufactured by VG Co., measurements were carried out with a MgK $\alpha$ ray (300 w) and at a photoelectron taking angle = 45 degrees.

Reference Example 1: Formation of aramid resin solution

To a well dried three-necked flask equipped with a stirrer, 2152 g of dehydrated and purified NMP, 27.04 g of p-phenylenediamine, and 50.06 g of 3,4'-diaminodiphenyl ether were added under ordinary temperatures, and dissolved under nitrogen. Then, 101.51 g of dichloride terephthalate was added thereto with ice cooling and stirring. Thereafter, the temperature was gradually increased, and finally upon reaction at 80 °C for 60 minutes, 37.04 g of potassium

hydroxide was added to effect a neutralization reaction, resulting in an aramid resin solution of NMP. The specific viscosity determined at 30 °C of a concentrated sulfuric acid solution with a concentration of 0.5 g/100 mL of the aramid resin obtained by reprecipitating the resulting dope with water was 3.5 dL/g.

Reference Example 2: Synthesis of single-wall carbon nanotube

By using Y type zeolite powder (manufactured by Tosoh Corporation; HSZ-320NAA) for a porous carrier, and using ferric acetate and cobalt acetate for a catalyst metal compound, a Fe/Co catalyst was carried on zeolite. Preparation was achieved so that each amount of the catalyst to be carried was 2.5 wt%. Thereafter, the catalyst powder was placed in a quartz boat, which was mounted in a quartz tube of a CVD device. Evacuation was carried out, and while introducing an Ar gas at a flow rate of 10 mL/min, the temperature was increased from room temperature to 800 °C. After the temperature reached a prescribed 800 °C, an ethanol vapor was introduced at a flow rate of 3000 mL/min, and the catalyst was held under an Ar/ethanol atmosphere for 30 minutes. The resulting black product was analyzed with a laser Raman spectroscopy and a transmission electron microscope. As a result, it was observed that single-wall carbon nanotubes were formed. Then, the resulting product (single-wall carbon nanotube / zeolite / metal catalyst) was dipped in 10 % hydrofluoric acid for 3 hours, and then washed with an ion exchange water until it became neutral. As a result, zeolite and the metal catalyst were removed to purify the carbon nanotubes. The resulting carbon nanotubes were observed by a TEM. As a result, the average diameter thereof was found to be 1.2 nm, and the average aspect ratio thereof was found to be 100 or more. However, most of them assumed a bundle structure with a width of about 10 nm.

Reference Example 3: Synthesis of multiwall carbon nanotubes

A reaction was effected in the same manner as with Reference Example 2, except that the reaction temperature in the CVD device was set at 600 °C. As a result, it was observed that multiwall carbon nanotubes were formed. In the same manner as with Reference Example 2, purification was carried out to remove zeolite and a metal catalyst. Then, by the use of an electric baking furnace (manufactured by Kurata Giken Co., Ltd., SCC-U-90/150), a graphitization treatment was carried out. First, the temperature was increased from room temperature to 1000 °C over 30 minutes under vacuum. Then, the temperature was increased from 1000 °C to 2000 °C for 30 minutes under an argon atmosphere at a pressure of 5 atm. Further, the temperature was increased from 2000 °C to 2800 °C over 1 hour. Thus, baking was carried out, thereby to obtain multiwall carbon nanotubes subjected to a graphitization treatment. The resulting carbon nanotubes were observed by a TEM. As a result, the average diameter was found to be 58 nm, and the average aspect ratio was found to be 36.

Example 1

To 74.3 g of NMP, 0.75 g of the multiwall carbon nanotubes synthesized in Reference Example 3 were added. An ultrasonic treatment was carried out for 16 hours by an ultrasonic wave with an oscillation frequency of 38 kHz. To the NMP dispersion, 237.5 g of the aramid resin solution in NMP formed in Reference Example 1 was added, and the mixture was stirred at 80 °C for 4 hours. As a result, a mixed dope of aramid resin / carbon nanotubes = 95/5 (weight ratio) was obtained. The polymer dope thus obtained was extruded into a coagulation bath at a temperature of 50 °C which is an aqueous solution of 30 wt% of NMP by the use of a cap with a hole diameter of 0.3 mm, L/D = 1, and 5 holes at a cylinder temperature of 50 °C at a rate of 3 m/min. The distance between the cap plane and the coagulation bath plane was set at 10 mm. The fiber taken out from the coagulation bath was washed with water in a 50 °C water bath, and dried by a 120 °C drying roller. Then, it was stretched on a 500 °C hot plate. Previously, the maximum draw ratio (MDR) in the stretching step was determined. In actuality, stretching was carried out in a 0.9-fold ratio thereof (20.3 times, rate 60.9 m/min), resulting in a composite fiber . The single fiber diameter of the fiber was 1.58 dtex. By the X-ray diffraction measurement of the stretched fiber, the orientation factor F of the carbon nanotubes was determined to be 0.25; and the orientation factor F of the aramid resin, 0.750 . Further, as a result of the tensile test, the elastic modulus was 75.4 GPa, and the strength was 26.2 cN/dtex.

Example 2

To 904 g of NMP, 5 g of the multiwall carbon nanotubes synthesized in Reference Example 3 were added. The NMP dispersion was circulated at a peripheral speed of 10 m/s by means of a wet dispersing machine DYNO-MILL (TYPE KDL) using 0.3-mm diameter beads made of zirconia, so that a bead mill treatment was carried out for 30 minutes. From the TEM measurements, the average diameter and the average aspect ratio of the carbon nanotubes after the treatment were determined to be 29 nm, and 58, respectively. Whereas, by the dynamic light scattering measurement, the average particle size in NMP was determined, and found to be 835 nm, which was smaller than 1147 nm at prior to

the treatment. 55 g of the NMP dispersion thus obtained was subjected to an ultrasonic treatment for 16 hours. Then, 245 g of the aramid resin solution formed in Reference Example 1 was added thereto, and the mixture was stirred at 80 °C for 4 hours. As a result, a mixed dope of aramid resin / carbon nanotubes = 98/2 (weight ratio) was obtained. The mixed dope was placed on a slide glass, and observed by an optical microscope. As a result, it was shown that the dispersibility of the carbon nanotubes was improved. Spinning was carried out in the same manner as with Example 1, resulting in a composite fiber. Various physical properties of the fiber are shown in Table 1. Whereas, a TEM (transmission electron microscope) measurement of the fiber cross section cut roughly in parallel with the fiber axis of the composite fiber was carried out. The photograph is shown in FIG. 1. It is shown that the carbon nanotubes each in a black rod shape are oriented along the fiber axis direction. Whereas, the width and the length thereof are roughly the same as the average diameter and the longitudinal length of the carbon nanotubes added.

Example 3

To 990 g of NMP, 10 g of the multiwall carbon nanotubes synthesized in Reference Example 3 were added. The dispersion was circulated at a peripheral speed of 10 m/s by means of a wet dispersing machine DYNO-MILL (TYPE KDL) using 0.3-mm diameter beads made of zirconia, so that a bead mill treatment was carried out for 1 hour. From the TEM measurements, the average diameter and the average aspect ratio of the carbon nanotubes after the treatment were determined to be 32 nm, and 53, respectively. Whereas, the average particle size determined from the dynamic light scattering measurement was found to be 886 nm. 75 g of the NMP dispersion was subjected to an ultrasonic treatment for 16 hours. Then, 237.5 g of the aramid resin solution of Reference Example 1 was added thereto, and the mixture was stirred at 80 °C for 4 hours. As a result, a mixed dope of aramid resin / carbon nanotubes = 95/5 (weight ratio) was obtained. Spinning was carried out in the same manner as with Example 1, resulting in a composite fiber. Various physical properties of the fiber are shown in Table 1. Whereas, a TEM (transmission electron microscope) measurement of the fiber cross section cut roughly in parallel with the fiber axis of the composite fiber was carried out. The photograph is shown in FIG. 2. It is shown that the carbon nanotubes each in a black rod shape are oriented along the fiber axis direction.

Example 4

To 2 g of the multiwall carbon nanotube synthesized in Reference Example 3, 150 mL of concentrated sulfuric acid with a concentration of about 98 % was added and stirred. Then, the mixture was cooled to 0 °C, and then, 50 mL of concentrated nitric acid with a concentration of about 61 % was slowly added dropwise thereto. Subsequently, a treatment was carried out in a 70 °C hot water bath by an ultrasonic wave with an oscillation frequency of 38 kHz for 1 hour. After cooling to room temperature, the strong acid solution was dispersed in water. By the use of a membrane filter made of Teflon with a pore size of 0.2 μm (manufactured by Millipore), filtration and washing were well performed to recover the carbon nanotubes. From the TEM measurements, the average diameter and the average aspect ratio of the carbon nanotubes after the strong acid treatment were determined to be 26 nm, and 56, respectively. Whereas, the average particle size determined from the dynamic light scattering measurement was found to be 552 nm. Further, the elemental analysis of the surface was carried out by ESCA, and it was found as follows: carbon 92.6 % and oxygen 7.4 %. 0.3 g of the carbon nanotubes were dispersed in 55 g of NMP, and the dispersion was subjected to an ultrasonic treatment for 16 hours. Then, 245 g of an aramid resin solution was added thereto, and the mixture was stirred at 80 °C for 4 hours. As a result, a mixed dope of aramid resin / carbon nanotubes = 98/2 (weight ratio) was obtained. The optical microscope observation of the mixed dope indicated that the dispersibility of the carbon nanotubes was high. Spinning was carried out in the same manner as with Example 1, resulting in a composite fiber. Various physical properties of the fiber are shown in Table 1.

Example 5

0.75 g of the carbon nanotubes subjected to the strong acid treatment, obtained in Example 4, were dispersed in 74.3 g of NMP, and the dispersion was subjected to an ultrasonic treatment for 16 hours. Then, 237.5 g of an aramid resin solution was added thereto, and the mixture was stirred at 80 °C for 4 hours. As a result, a mixed dope of aramid resin / carbon nanotubes = 95/5 (weight ratio) was obtained. The optical microscope observation of the mixed dope indicated that the dispersibility of the carbon nanotubes was also high even in this case. Spinning was carried out in the same manner as with Example 1, resulting in a composite fiber. Various physical properties of the fiber are shown in Table 1. Whereas, a TEM (transmission electron microscope) measurement of the fiber cross section cut roughly in parallel with the fiber axis of the composite fiber was carried out (FIG. 3) as with Example 3 . This indicates that the carbon nanotubes are oriented along the fiber axis direction.

Example 6

To 1 g of the carbon nanotubes subjected to the strong acid treatment, obtained in Example 4, 10 g of phenol was added. The mixture was treated in a mortar for 10 minutes at about 70 °C, and then, was subjected to an ultrasonic treatment in a 70 °C hot water bath by an ultrasonic wave with an oscillation frequency of 28 kHz for 10 minutes. 100g of diphenyl carbonate and 0.061 g of dimethyl aminopyridine were added thereto, so that the reaction was started at 200 °C under ordinary pressure. After 30 minutes, the temperature was increased to 220 °C still under ordinary pressure, and the inside of the system was gradually reduced in pressure. After 3 hours from the start of the reaction, further, the temperature was increased and the pressured was reduced. After 5 hours from the start of the reaction, the finally attained temperature and the degree of vacuum in the system were set at 320 °C and about 0.5 mmHg (66.7 Pa), respectively. The phenol and diphenyl carbonate formed by the reaction were slowly removed outside the system. After the completion of the reaction, dichloromethane was added to the residue. Suction filtration was carried out by a membrane filter made of Teflon with a pore diameter of 0.2 μm (manufactured by Millipore Co.), thereby to remove residual phenol and diphenyl carbonate. As a result, 0.8 g of carbon nanotubes were separated and purified. From the TEM measurements, the average diameter and the average aspect ratio of the carbon nanotubes after the reaction were determined to be 28 nm, and 50, respectively. Whereas, the average particle size determined from the dynamic light scattering measurement was found to be 582 nm. Further, the elemental analysis of the surface was carried out by ESCA, and it was found as follows: carbon 94.3 % and oxygen 5.7 %. Thus, the amount of carbons has been increased as compared with the strong acid treated product. This indicates that the esterification reaction has proceeded. By the use of 0.75 g of the carbon nanotube phenyl ester form thus obtained, a mixed dope of aramid resin / carbon nanotubes = 95/5 (weight ratio) was formed as with Example 5. Spinning was carried out, resulting in a composite fiber. Various physical properties of the fiber are shown in Table 1.

Example 7

To 1 g of the carbon nanotube phenyl ester form obtained by the technique of Example 6, 50 g phenol was added. The mixture was treated in a mortar for 10 minutes at about 70 °C, and then, subjected to an ultrasonic treatment in a 70 °C hot water bath by an ultrasonic wave with an oscillation frequency of 28 kHz for 10 minutes. 100g of aniline was added thereto, so that the reaction was started at 200 °C under ordinary pressure. After 30 minutes, the temperature was increased to 220 °C still under ordinary pressure. After 1 hour from the start of the reaction, further, the temperature was increased. After 3 hours from the start of the reaction, the finally attained temperature and the degree of vacuum in the system were set at 280 °C and about 0.5 mmHg (66.7 Pa), respectively. The phenol and aniline formed by the reaction were slowly removed outside the system. After the completion of the reaction, dichloromethane was added to the residue. Suction filtration was carried out by a membrane filter made of Teflon with a pore diameter of 0.2 μm (manufactured by Millipore Co.), thereby to remove residual phenol and aniline. As a result, 0.9 g of carbon nanotubes were separated and purified. From the TEM measurements, the average diameter and the average aspect ratio of the carbon nanotubes after the reaction were determined to be 29 nm, and 48, respectively. Whereas, the average particle size determined from the dynamic light scattering measurement was found to be 539 nm. Further, the elemental analysis of the surface was carried out by ESCA, and it was found as follows: carbon 94.1 %, nitrogen 1.5 %, and oxygen 4.4 %. Thus, nitrogen was detected, and the amount of oxygen has been decreased as compared with the phenyl ester form. This indicates that the amide form has been formed. By the use of 0.75 g of the carbon nanotube phenyl amide form thus obtained, a mixed dope of aramid resin / carbon nanotubes = 95/5 (weight ratio) was formed as with Example 5. Spinning was carried out, resulting in a composite fiber. Various physical properties of the fiber are shown in Table 1.

Example 8

A composite fiber was obtained according to Example 2, except that the multiwall carbon nanotube (trade name VGCF) manufactured by Showa Denko K. K., were used. Incidentally, the average diameter and the average aspect ratio of the carbon nanotubes after the bead mill treatment were 107 nm and 31, respectively. Whereas, the average particle size determined from the dynamic light scattering measurement was found to be 1010 nm. Various physical properties of the fiber are shown in Table 1.

Example 9

A composite fiber was obtained according to Example 2, except that the multiwall carbon nanotubes (trade name VGCF) manufactured by Showa Denko K. K., were used. Incidentally, the average diameter and the average aspect ratio of the carbon nanotubes after the strong acid treatment were 94 nm and 28, respectively. Whereas, the average particle size determined from the dynamic light scattering measurement was found to be 682 nm. Various

physical properties of the fiber are shown in Table 1.

Comparative Example 1

To 245 g of the aramid resin solution of NMP formed in Reference Example 1, 55 g of NMP was further added. The mixture was stirred at a temperature of 80 °C for 4 hours, thereby to obtain an aramid resin solution not containing carbon nanotubes with roughly the same polymer concentration with Examples. Spinning was carried out from the solution in the same manner as in Example 1 to obtain an aramid fiber. Various physical properties of the fiber are shown in Table 1.

Comparative Example 2

In the spinning step in Example 1, the composite fiber before stretching and after drying by a 120 °C drying roller was taken out. It was evaluated for the various physical properties. The results are shown in Table 1.

Table 1

| | Carbon Nanotube | | | Draw Ratio | Single-Fiber Diameter | Orientation of Carbon Nanotubes | | Orientation of Aramid Resin | Fiber Mechanical Properties | |
|---|---|---|---|---|---|---|---|---|---|---|
| | Type | Content | Treatment Method | | | Orientation Coefficient F | Orientation Degree P | Orientation Coefficient F | Modulus of Elasticity | Strength |
| | | wt% | | times | dtex | | | | GPa | cN/dtex |
| Example 1 | MWNT | 5 | Sonication only | 20.3 | 1.58 | 0.25 | - | 0.750 | 75.4 | 26.2 |
| Example 2 | MWNT | 2 | Bead milling | 20.7 | 1.40 | - | 0.48 | 0.748 | 80.5 | 28.6 |
| Example 3 | MWNT | 5 | Bead milling | 21.6 | 1.17 | 0.524 | - | 0.752 | 81.2 | 30.9 |
| Example 4 | MWNT | 2 | Strong acid treatment | 19.7 | 1.78 | - | 0.56 | 0.749 | 74.2 | 27.4 |
| Example 5 | MWNT | 5 | Strong acid treatment | 18.9 | 1.87 | 0.412 | - | 0.755 | 77.4 | 26.5 |
| Example 6 | MWNT | 5 | Strong acid treatment →Esterification | 21.5 | 1.55 | 0.430 | - | 0.750 | 74.5 | 27.7 |
| Example 7 | MWNT | 5 | Strong add treatment →Amidation | 20.0 | 1.52 | 0.487 | - | 0.754 | 75.1 | 28.0 |
| Example 8 | MWNT | 2 | Bead milling | 19.5 | 1.43 | - | 0.54 | 0.734 | 79.3 | 27.6 |
| Example 9 | MWNT | 2 | Strong acid treatment | 19.2 | 1.58 | - | 0.60 | 0.742 | 74.2 | 27.0 |
| Comp. Ex.1 | - | 0 | - | 21.7 | 1.52 | - | - | 0.750 | 74.0 | 25.6 |
| Comp. Ex. 2 | MWNT | 5 | Sonication only | 1 | 37.0 | 0.093 | - | 0.104 | 6.7 | 1.1 |

**Claims**

1. A composite fiber, comprising: a composition comprising 100 parts by weight of a wholly aromatic polyamide mainly comprising structural units of the following general formulae (A) and (B):

$$-NH-Ar^1-NH- \qquad (A)$$

$$-OC-Ar^2-CO- \qquad (B)$$

where in the general formulae (A) and (B), $Ar^1$ and $Ar^2$ each independently represent a bivalent aromatic group having 6 to 20 carbon atoms; and 0.01 to 100 parts by weight of carbon nanotubes with an average diameter of 300 nm or less, and an average aspect ratio of 5.0 or more, **characterized in that** the carbon nanotubes are oriented in the fiber axis direction,
and further **characterized in that** the carbon nanotubes are multiwall carbon nanotubes, and the orientation factor F of the carbon nanotubes determined with the following formula (1):

$$<\cos^2\phi> = \frac{\int_0^{\pi/2} I(\phi)\cos^2\phi\sin\phi d\phi}{\int_0^{\pi/2} I(\phi)\sin\phi d\phi}$$
$$F = \frac{3<\cos^2\phi>-1}{2} \qquad (1)$$

where $\phi$ represents the azimuth in an X-ray diffraction measurement, and I represents the diffraction strength of the 002 crystal face,
is 0.1 or more.

2. The composite fiber according to claim 1, wherein the wholly aromatic polyamide is such that $Ar^1$ is:

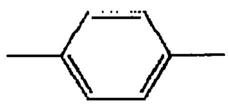

and/or

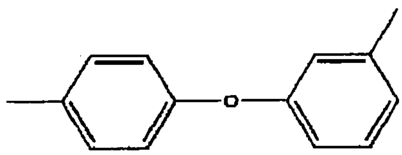

and such that $Ar^2$ is:

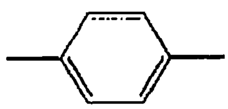

3. The composite fiber according to claim 2, wherein the wholly aromatic polyamide is a copolymer in which $Ar^1$ is :

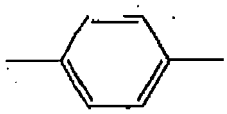

and

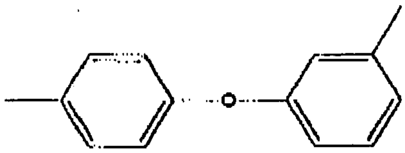

and, $Ar^2$ is :

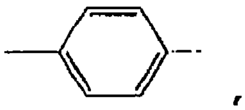

and the copolymerization ratio is 1 : 0.8 to 1 : 1.2.

4. The composite fiber according to claim 1, wherein the orientation factor F of the wholly aromatic polyamide which can be determined by the formula (1) is 0.5 or more.

5. The composite fiber according to claim 1, wherein the proportion of the oxygen atoms present on the surface of the carbon nanotube to be used is in the range of 2 to 25 per 100 of carbon atoms.

6. The composite fiber according to claim 1, wherein the carbon nanotubes to be used are the ones subjected to a physical size reduction treatment.

7. The composite fiber according to claim 1, wherein the carbon nanotubes to be used are the ones subjected to a treatment with a strong acid having a pH of 0.01 to 2.

8. The composite fiber according to claim 1, using carbon nanotubes which have been esterified, following a treatment, with a strong acid having a pH of 0.01 to 2.

9. The composite fiber according to claim 1, using carbon nanotubes, which have been amidated, following a treatment with a strong acid having a pH of 0.01 to 2 and esterification.

10. A method for manufacturing the composite fiber according to claim 1, **characterized by** preparing a mixed solution of a wholly aromatic polyamide and carbon nanotubes, and performing spinning from the solution to orient the carbon nanotubes.

11. The method for manufacturing the composite fiber according to claim 10, using carbon nanotubes subjected to a physical size reduction treatment.

12. The method for manufacturing the composite fiber according to claim 10, using carbon nanotubes subjected to a treatment with a strong acid having a pH of 0.01 to 2

13. The method for manufacturing the composite fiber according to claim 10, using carbon nanotubes which have been esterified, following a treatment with a strong acid having a pH of 0.01 to 2.

14. The method for manufacturing the composite fiber according to claim 10, using carbon nanotubes which have been amidated, following a treatment with a strong acid having a pH of 0.01 to 2, and esterification.

## Patentansprüche

1. Verbundfaser, umfassend: eine Zusammensetzung, umfassend 100 Gewichtsteile eines vollaromatischen Polyamids, das hauptsächlich Struktureinheiten der folgenden allgemeinen Formeln (A) und (B) umfaßt:

$$-NH-Ar^1-NH- \qquad (A)$$

$$-OC-Ar^2-CO- \qquad (B)$$

wobei in den allgemeinen Formeln (A) und (B) $Ar^1$ und $Ar^2$ jeweils unabhängig voneinander für eine zweiwertige aromatische Gruppe mit 6 bis 20 Kohlenstoffatomen stehen; und 0,01 bis 100 Gewichtsteile Kohlenstoffnanoröhren mit einem mittleren Durchmesser von 300 nm oder weniger und einem mittleren Aspektverhältnis von 5,0 oder mehr, **dadurch gekennzeichnet, daß** die Kohlenstoffnanoröhren in Richtung der Faserachse orientiert sind, und ferner **dadurch gekennzeichnet, daß** es sich bei den Kohlenstoffnanoröhren um mehrwandige Kohlenstoffnanoröhren handelt und der Orientierungsfaktor F der Kohlenstoffnanoröhren, der anhand der folgenden Formel (1) bestimmt wird:

$$< \cos^2 \phi > = \frac{\int_0^{\pi/2} I(\phi) \cos^2 \phi \sin \phi d\phi}{\int_0^{\pi/2} I(\phi) \sin \phi d\phi}$$

$$F = \frac{3 < \cos^2 \phi > -1}{2} \qquad (1)$$

wobei □ für das Azimut bei einer Röntgenbeugungsmessung steht und I für die Beugungsstärke der 002-Kristallfläche steht, 0,1 oder mehr beträgt.

2. Verbundfaser nach Anspruch 1, wobei das vollaromatische Polyamid so beschaffen ist, daß $Ar^1$ für:

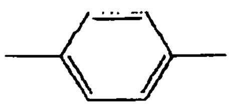

und/oder

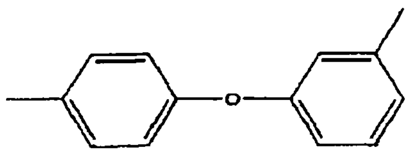

steht und $Ar^2$ für:

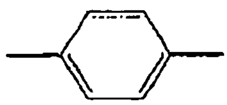

steht.

3. Verbundfaser nach Anspruch 2, wobei es sich bei dem vollaromatischen Polyamid um ein Copolymer handelt, in dem $Ar^1$ für:

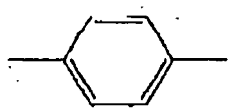

und

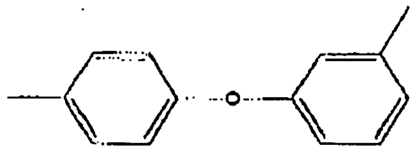

steht und $Ar^2$ für:

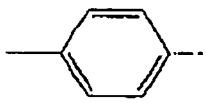

steht
und das Copolymerisationsverhältnis 1 : 0,8 bis 1 : 1,2 beträgt.

4. Verbundfaser nach Anspruch 1, wobei der Orientierungsfaktor F des vollaromatischen Polyamids, der durch Formel (1) bestimmt werden kann, 0,5 oder mehr beträgt.

5. Verbundfaser nach Anspruch 1, wobei der Anteil der an der Oberfläche der zu verwendenden Kohlenstoffnanoröhre vorliegenden Sauerstoffatome im Bereich von 2 bis 25 pro 100 Kohlenstoffatome liegt.

6. Verbundfaser nach Anspruch 1, wobei es sich bei den zu verwendenden Kohlenstoffnanoröhren um einer physikalischen Größenverringerungsbehandlung unterworfene Kohlenstoffnanoröhren handelt.

7. Verbundfaser nach Anspruch 1, wobei es sich bei den zu verwendenden Kohlenstoffnanoröhren um einer Behandlung mit einer starken Säure mit einem pH-Wert von 0,01 bis 2 unterworfene Kohlenstoffnanoröhren handelt.

8. Verbundfaser nach Anspruch 1 mit Kohlenstoffnanoröhren, die nach einer Behandlung mit einer starken Säure mit einem pH-Wert von 0,01 bis 2 verestert worden sind.

9. Verbundfaser nach Anspruch 1 mit Kohlenstoffnanoröhren, die nach einer Behandlung mit einer starken Säure mit einem pH-Wert von 0,01 bis 2 und Veresterung amidiert worden sind.

10. Verfahren zur Herstellung der Verbundfaser nach Anspruch 1, **dadurch gekennzeichnet, daß** man eine gemischte Lösung von vollaromatischem Polyamid und Kohlenstoffnanoröhren herstellt und die Lösung zur Orientierung der Kohlenstoffnanoröhren verspinnt.

11. Verfahren zur Herstellung der Verbundfaser nach Anspruch 10 unter Verwendung von einer physikalischen Größenverringerungsbehandlung unterworfenen Kohlenstoffnanoröhren.

12. Verfahren zur Herstellung der Verbundfaser nach Anspruch 10 unter Verwendung von einer Behandlung mit einer starken Säure mit einem pH-Wert von 0,01 bis 2 unterworfenen Kohlenstoffnanoröhren.

13. Verfahren zur Herstellung der Verbundfaser nach Anspruch 10 unter Verwendung von Kohlenstoffnanoröhren, die nach einer Behandlung mit einer starken Säure mit einem pH-Wert von 0,01 bis 2 verestert worden sind.

14. Verfahren zur Herstellung der Verbundfaser nach Anspruch 10 unter Verwendung von Kohlenstoffnanoröhren, die nach einer Behandlung mit einer starken Säure mit einem pH-Wert von 0,01 bis 2 und Veresterung amidiert worden sind.

## Revendications

**1.** Fibre composite, comprenant : une composition comprenant 100 parties en poids d'un polyamide entièrement aromatique comprenant principalement des motifs structuraux répondant aux formules générales (A) et (B) suivantes :

$$-NH-Ar^1-NH- \quad (A)$$

$$-OC-Ar^2-CO- \quad (B)$$

où, dans les formules générales (A) et (B), $Ar^1$ et $Ar^2$ représentent chacun indépendamment un groupe aromatique bivalent portant 6 à 20 atomes de carbone ; et 0,01 à 100 parties en poids de nanotubes de carbone avec un diamètre moyen de 300 nm ou moins, et un rapport de forme moyen de 5,0 ou plus, **caractérisée en ce que** les nanotubes de carbone sont orientés dans la direction de l'axe des fibres, et également **caractérisée en ce que** les nanotubes de carbone sont des nanotubes de carbone multiparois, et le facteur d'orientation F des nanotubes de carbone déterminé par la formule (1) suivante :

$$<\cos^2\phi> = \frac{\int_0^{\Pi/2} I(\phi)\cos^2\phi\sin\phi d\phi}{\int_0^{\Pi/2} I(\phi)\sin\phi d\phi}$$

$$F = \frac{3<\cos^2\phi>-1}{2} \qquad (1)$$

où ϕ représente l'azimut dans une mesure de diffraction des rayons X, et I représente l'intensité de diffraction de la face cristalline 002,
est de 0,1 ou plus.

**2.** Fibre composite selon la revendication 1, dans laquelle le polyamide entièrement aromatique est tel que $Ar^1$ est :

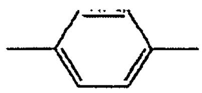

et/ou

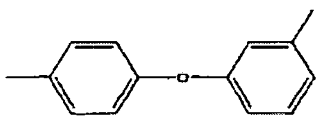

et tel que $Ar^2$ est :

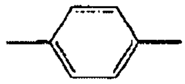

.

**3.** Fibre composite selon la revendication 2, dans laquelle le polyamide entièrement aromatique est un copolymère dans lequel $Ar^1$ est :

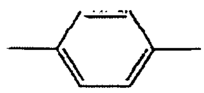

et

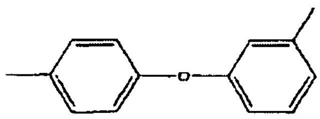

et $Ar^2$ est :

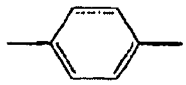

,

et le rapport de polymérisation est de 1:0,8 à 1:1,2.

**4.** Fibre composite selon la revendication 1, dans laquelle le facteur d'orientation F du polyamide entièrement aromatique qui peut être déterminé par la formule (1) est de 0,5 ou plus.

**5.** Fibre composite selon la revendication 1, dans laquelle la proportion des atomes d'oxygène présents sur la surface des nanotubes de carbone à utiliser se situe dans la gamme de 2 à 25 pour 100 atomes de carbone.

**6.** Fibre composite selon la revendication 1, dans laquelle les nanotubes de carbone à utiliser sont ceux soumis à un traitement de réduction de la taille physique.

**7.** Fibre composite selon la revendication 1, dans laquelle les nanotubes de carbone à utiliser sont ceux soumis à un traitement avec un acide fort ayant un pH de 0,01 à 2.

**8.** Fibre composite selon la revendication 1, utilisant des nanotubes de carbone qui ont été estérifiés, après un traitement avec un acide fort ayant un pH de 0,01 à 2.

**9.** Fibre composite selon la revendication 1, utilisant des nanotubes de carbone qui ont été amidés, après un traitement avec un acide fort ayant un pH de 0,01 à 2 et une estérification.

**10.** Procédé de fabrication de la fibre composite de la revendication 1, **caractérisé par** la préparation d'une solution mixte d'un polyamide entièrement aromatique et de nanotubes de carbone, et la réalisation d'un filage à partir de la solution pour orienter les nanotubes de carbone.

**11.** Procédé de fabrication de la fibre composite selon la revendication 10, utilisant des nanotubes de carbone soumis à un traitement de réduction de la taille physique.

**12.** Procédé de fabrication de la fibre composite selon la revendication 10, utilisant des nanotubes de carbone soumis à un traitement avec un acide fort ayant un pH de 0,01 à 2.

**13.** Procédé de fabrication de la fibre composite selon la revendication 10, utilisant des nanotubes de carbone qui ont été estérifiés, après un traitement avec un acide fort ayant un pH de 0,01 à 2.

**14.** Procédé de fabrication de la fibre composite selon la revendication 10, utilisant des nanotubes de carbone qui ont été amidés, après un traitement avec un acide fort ayant un pH de 0,01 à 2 et une estérification.

Fig. 1

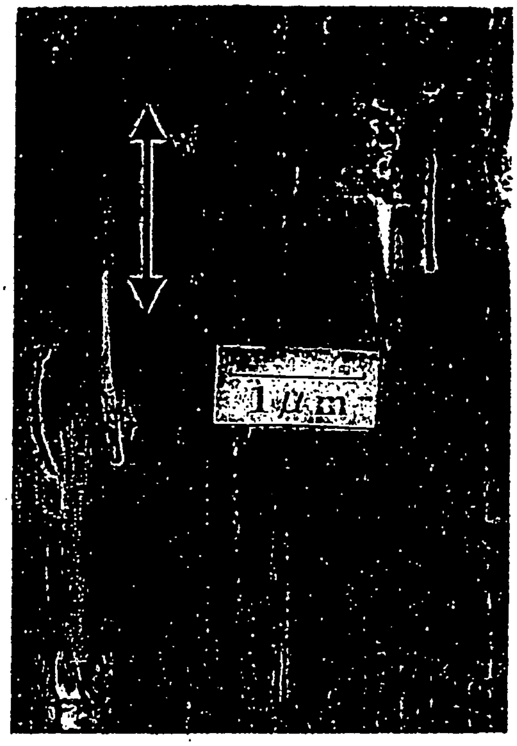


Fig. 2

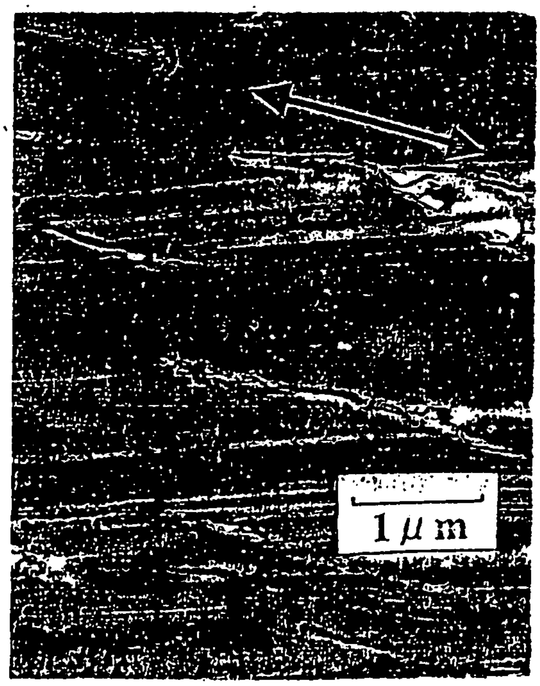

Fig. 3

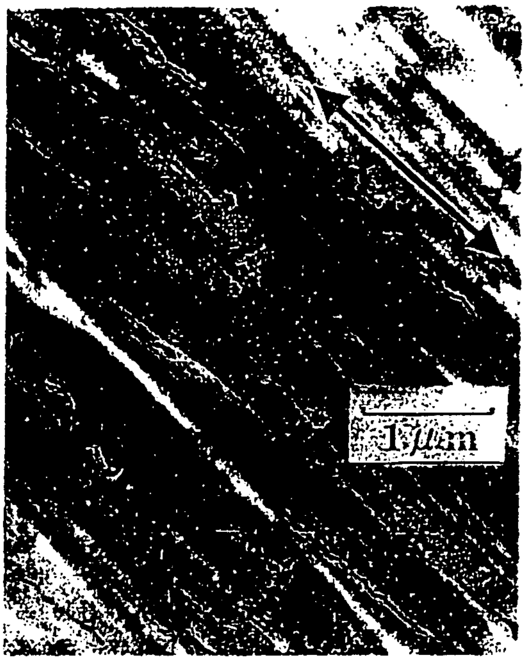

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8026164 B
- WO 00069958 A
- WO 03085049 A


### Non-patent literature cited in the description


- **Masao Kakumoto et al.** KOUBUNNSHI X-SENN KAISETSU. MARUZEN, 1968
- **A. M. Rao et al.** *Phys. Rev.,* 2000, vol. 84 (8), 1820